# EUROPEAN PATENT SPECIFICATION

(11) **EP 0 320 070 B1**
(45) Date of publication and mention of the grant of the patent: **18.08.1993**
(21) Application number: 88202793.1
(22) Date of filing: 06.12.1988
(51) Int. Cl.: C08G 69/18, C08G 18/80

(54) **Process for the preparation of a nylon block copolymer**
Verfahren zur Herstellung eines Nylon-Blockmischpolymerisats
Procédé de préparation d'un copolymère en bloc de nylon

(30) Priority: 08.12.1987 NL 8702950
(43) Date of publication of application: 14.06.1989
(73) Proprietor: DSM N.V., 6411 TE Heerlen (NL)
(72) Inventor: van Geenen, Albert Arnold, NL-6441 KM Brunssum (NL); Bongers, Jozef Johannes Maria, NL-6181 HV Stein (L.) (NL); Schröder, Christiaan, NL-6413 MP Heerlen (NL)

(56) References cited:
- EP-A- 0 158 393
- US-A- 3 923 925

## Description

The invention relates to a process for the preparation of a nylon block copolymer in which two or more reaction streams consisting of molten lactam are combined in a mould, said reaction streams containing one or more polyols, lactam blocked polyisocyanates and catalysts, and the catalysts and the lactam blocked polyisocyanates being in different streams. Such a process is described in DE-A-2,147,365. In it, a nylon polymer is obtained by combining the reaction streams, each having a temperature of 100¤C, in a mould having a temperature of 160¤C. Upon doing so, a nylon polymer is formed immediately. However, the polyol in the end product is not homogeneously distributed throughout the nylon matrix. This results in a disappointing impact resistance. Figure 1 shows a transmission electron microscope (TEM) photograph of a nylon polymer, obtained by said process, in which the inhomogeneous distribution of the polyol is visible (magnification 16000x).

The object of the invention is to provide a simple process for the preparation of a nylon block copolymer with excellent impact resistance. To this end, the two or more reaction streams, each having a temperature of 68¤C-95¤C, preferably 75¤C-90¤C, are combined in a mould having a temperature of 100¤C-180¤C, preferably 135¤C-150¤C. First, at a temperature of 68¤C-95¤C, a prepolymer is formed by the reaction between polyol(s) and lactam blocked isocyanate, following which the nylon block copolymer is formed at a temperature of 100¤C-180¤C. The advantage of this process is that now the polyol is homogeneously distributed throughout the nylon matrix, and as a consequence a nylon block copolymer with excellent notched impact resistance is obtained. Figure 2 shows a transmission electron microscope photograph of a nylon block copolymer, obtained by the process of the subject invention, in which the homogeneous distribution of the polyol is visible (magnification: 60000x).

The polyols applied are preferably chosen from the group of polyether polyols, polyester polyols and polybutadiene polyols, though other polyols may also be applied. Examples of suitable polyols are the diols, triols and tetraols derived from polyethylene oxide and polypropylene oxide. However, it also is quite possible to apply a polyol obtained by ethoxylation and/or propoxylation of, for instance, ethylene amine, glucose, fructose or saccharose. The polyols described above mainly are polymeric polyols. The (weight) average molecular weight of these polyols is at least 2000, more in particular between 2500 and 5000. It also is possible to start from mixtures of two or more polyols.

The expression "lactam blocked poly- or diisocyanate" is understood to mean the reaction product of a polyisocyanate or a diisocyanate with a lactam, more in particular a caprolactam. In prin- ciple, it is assumed that virtually all isocyanates have reacted with a lactam molecule yielding the compound 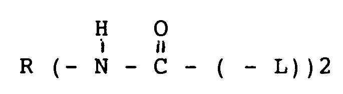
where - (- L) represents an unopened lactam ring and R an alkyl, aralkyl, alkaryl or aryl group, cyclic or not.

In general, polyisocyanates with at least two isocyanate groups and 6-25 carbon atoms can be applied. By preference, use is made of aliphatic diisocyanates such as 1,5-hexane diisocyanate and 1,6-hexane diisocyanate, but araliphatic, cycloaliphatic and aromatic isocyanates can also be applied. Examples are isophorone diisocyanate, 2,4-and 2,6- toluene diisocyanate, 2,2-, 2,4- and 4,4-diphenylmethane diisocyanate (MDI) and polyphenylene polymethylene polyisocyanates.

The reaction product of polyol and lactam blocked isocyanate is already known, being described in EP-A 0135,233. Said patent discloses a process for the preparation of an N-substituted carbamoyl lactam compound. To prepare this compound, a polyol and lactam blocked polyisocyanate in molten condition are reacted in the presence of a suitable catalyst, preferably a Lewis acid. The reaction is preferably carried out in molten lactam, and most preferably in molten caprolactam. When the reaction is allowed to proceed at a temperature between the melting point of lactam and 150°C, compounds of the following formula are formed: 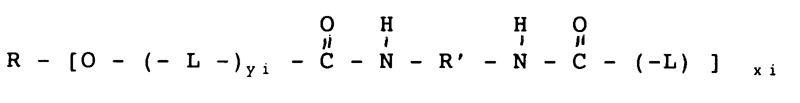
where:
R represents a polyether residue or hydrocarbon residue derived from a polyol of the formula R(OH)ₓᵢ
xi an integer ≧ 2
R' an alkyl, aralkyl, alkaryl or aryl group, cyclic or not
yi an integer ≧ 0
(-L) an unopened lactam ring
(-L-) an opened lactam block

From GB-1,067,153 and GB-1,099,265 it appears that urethanelike reaction products of polyalkene glycols and polyisocyanates can be applied as promotor. After preparation, the promotor is combined with molten lactam and an anionic catalyst (both having a temperature of 100°C). The mixture of molten lactam, catalyst and promotor (N-substituted carbomoyl lactam compound) is subsequently introduced into a mould having a temperature of 140°C-180°C, where a nylon block copolymer is formed. As a condition to be met in the preparation of the promotor it is stated that the number of isocyanate groups in the amount of isocyanate applied exceeds the number of hydroxyl groups in the amount of polyol applied, so that the previously prepared promotor does not contain any hydroxyl groups. Here, too, end products with reduced notched impact resistance are obtained. The cause of this low impact resistance is to be found in the fact that, at the moment that the reaction components are combined in the mould, the initial temperature of the components is so high that the nylon polymer is formed immediately, with as a consequence that the polyol is not distributed homogeneously throughout the nylon matrix.

The amount of polyol applied in the subject invention is 2-70 wt.% relative to the total amount of mixture prepared. In choosing the appropriate amount of polyol, care is taken that the number of lactam blocked isocyanate groups in the amount of isocyanate exceeds the number of hydroxyl groups in the amount of polyol applied. Subject to this condition, nylon block copolymers with a notched impact strength (Izod according to ASTM D 256) of 30-60 kJ/m are obtained in a simple manner. The block copolymer is formed in a short time, e.g. in less than 10 minutes, more in particular between 10 seconds and 5 minutes, under mild conditions as regards temperature and pressure.

The process is carried out with a sodium lactamate, potassium lactamate or a Lewis acid as catalyst. Examples of suitable Lewis acids are bromomagnesium lactamate, magnesium chloride, calcium methoxide, calcium lactamate, calcium acetylacetonate, barium lactamate, barium chloride, barium acetylacetonate, zinc chloride, zinc acetylacetonate, zinc lactamate, cadmium chloride, cadmium acetylacetonate, cadmium lactamate, boron acetylacetonate, aluminium trilactamate, aluminium chloride, chloroaluminium dilactamate, lactam aluminium chloride, tin (II) chloride, tin (II) ethoxide, tin (II) acetylacetonate, titanium trichloride, titanium (III) acetyl-acetonate, titanium (III) ethoxide, vanadium (III) ethoxide, vanadium (III) acetylacetonate, vanadium (III) chloride, chromium (III) chloride, chromium (III) acetylacetonate, iron (III) chloride, iron (III) acetylacetonate, iron (II) acetylacetonate, cobalt (II) chloride, cobalt (II) acetylacetonate, nickel acetylacetonate, nickel chloride, chromium (III) acetate, copper (II) acetylacetonate. By preference, use is made of sodium, potassium or bromomagnesium caprolactamate, and in particular of sodium or potassium caprolactamate.

As lactam, use is made of a molten lactam, preferably molten caprolactam, but the process can also be carried out with other lactams such as laurinolactam. In the preparation of the nylon block copolymer it may be essential to carry out the polymerization in the presence of one or more compounds normally applied in nylon block copolymers, such as fillers, softeners, flame retardants, stabilizers and reinforcing fibres, such as asbestos or glass fibres. Below, the present invention will be elucidated on the basis of some examples.

### Example I

In a storage vessel (A) of a RIM nylon machine, 225 g Caradol (R) 36-3 (triol of Shell, MM 4700), 72 caprolactam blocked hexamethylene diisocyanate and 203 g caprolactam were mixed and heated at 80¤C. In the catalyst vessel (B) a solution of 81.2 g potassium caprolactamate (1 molar in caprolactam) and 418.8 g caprolactam was also heated to 80¤C.
Subsequently, 200 g of a 1:1 mixture of A and B was introduced into a steel plate mould (3.2 mm) heated at 140¤C.
In dry condition, the nylon block copolymer thus obtained had a notched impact strength (Izod according to ASTM D 256) of 47 kJ/m2 and an E-modulus (according to ASTM D 790...) of 1420 N/mm².

### Comparative example A

In a storage vessel (A) of a RIM nylon machine, 225 g Caradol (R) 36-3 (triol of Shell, MM 4700), 72 g caprolactam blocked hexamethylene diisocyanate and 203 g caprolactam were mixed and heated at 110¤C.
In the catalyst vessel (B) a solution of 81.2 g potassium caprolactamate (1 molar in caprolactam) and 418.8 caprolactam was also heated to 110¤C.
Subsequently, a 1:1 mixture of A and B was introduced into a steel plate mould (3.2 mm) heated at 140¤C.
In dry condition, the nylon block copolymer thus obtained had a notched impact strength (Izod according to ASTM D 256) of 13 kJ/m2 and an E-modulus (according to ASTM D 790) of 2500 N/mm2.

## Claims

1. Process for the preparation of a nylon block copolymer in which two or more reaction streams are combined in a mould, said reaction streams consisting of molten lactam containing 2-70 wt% relative to the total amount of mixture of one or more polyols with a molecular weight of at least 2000, the reaction product of a polyisocyanate or a diisocyanate with a lactam and sodium lactamate, potassium lactamate or a Lewis acid as catalysts, and the catalysts and the reaction product of the polyisocyanate or diisocyanate with a lactam being in different streams, characterized in that the reaction streams, having a temperature of 68°C-95°C are introduced into a mould having a temperature of 100°C-180°C.

2. Process according to claim 1, characterized in that the temperature of the mould is between 135°C and 150°C.

3. Process according to claim 1, characterized in that the temperature of each of the reaction streams is 75°C-90°C.

4. Objects made using a polyamide obtained according to the process of any of the preceding claims.

## Patentansprüche

1. Verfahren zur Herstellung eines Nylon-Blockcopolymers, bei dem zwei oder mehrere Reaktionsströme in einer Form vereinigt werden, wobei diese aus geschmolzenem Lactam bestehenden Reaktionsströme 2-70 Gew.-%, bezogen auf die Gesamtmenge einer Mischung aus einem oder mehreren Polyolen mit einem Molekulargewicht von wenigstens 2000, des Reaktionsprodukts eines Polyisocyanats oder eines Diisocyanats mit einem Lactam und Natriumlactamat, Kaliumlactamat oder eine Lewis-Säure als Katalysator enthalten, und wobei die Katalysatoren und das Reaktionsprodukt des Polyisocyanats oder Diisocyanats mit einem Lactam in verschiedenen Strömen vorliegen, dadurch gekennzeichnet, daß die Reaktionsströme, die eine Temperatur von 68°C-95°C haben, in eine Form eingebracht werden, die eine Temperatur von 100°C-180°C hat.

2. Verfahren nach Anspruch 1, gekennzeichnet dadurch, daß die Temperatur der Form zwischen 135°C und 150°C liegt.

3. Verfahren nach Anspruch 1, gekennzeichnet dadurch, daß die Temperatur eines jeden Reaktionsstroms 75°C-90°C beträgt.

4. Gegenstände, hergestellt unter Verwendung eines Polyamids, das gemäß dem Verfahren nach irgendeinem der vorangegangenen Ansprüche erhalten worden ist.

## Revendications

1. Procédé de préparation d'un copolymère en bloc de nylon selon lequel on combine dans un moule deux ou plusieurs courants de réaction, lesdits courants de réaction consistant en lactame fondu et contenant de 2 à 70 % en poids par rapport au mélange total d'un ou plusieurs polyols ayant une masse moléculaire d'au moins 2000, le produit de réaction d'un polyisocyanate ou un diisocyanate avec un lactame et du lactamate de sodium, du lactamate de potassium ou un acide de Lewis à titre de catalyseurs, les catalyseurs et le produit de réaction du polyisocyanate ou diisocyanate avec un lactame étant dans des courants différents, caractérisé en ce qu'on introduit les courants de réaction à une température de 68 à 95°C dans un moule qui est à une température de 100 à 180°C.

2. Procédé selon la revendication 1, caractérisé en ce que la température du moule est comprise entre 135 et 150°C.

3. Procédé selon la revendication 1, caractérisé en ce que la température de chacun des courants de réaction est comprise entre 75 et 90°C.

4. Articles fabriqués en utilisant un polyamide obtenu selon le procédé de l'une quelconque des revendications précédentes.
